(19) Europäisches Patentamt / European Patent Office / Office européen des brevets

(11) **EP 2 740 180 B1**

(12) **EUROPÄISCHE PATENTSCHRIFT**

(45) Veröffentlichungstag und Bekanntmachung des Hinweises auf die Patenterteilung:
**24.10.2018   Patentblatt 2018/43**

(51) Int Cl.:
*H01Q 1/50* (2006.01)   *H02H 1/04* (2006.01)

(21) Anmeldenummer: **12735495.9**

(86) Internationale Anmeldenummer:
**PCT/EP2012/063047**

(22) Anmeldetag: **04.07.2012**

(87) Internationale Veröffentlichungsnummer:
**WO 2013/017366 (07.02.2013 Gazette 2013/06)**

(54) **ÜBERSPANNUNGSSCHUTZVORRICHTUNG MIT SPULENANORDNUNG**

OVER-VOLTAGE PROTECTION DEVICE HAVING A COIL ASSEMBLY

DISPOSITIF DE PROTECTION CONTRE LES SURTENSIONS COMPORTANT UN SYSTÈME DE BOBINES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2011   DE 102011080411**

(43) Veröffentlichungstag der Anmeldung:
**11.06.2014   Patentblatt 2014/24**

(73) Patentinhaber: **Rohde & Schwarz GmbH & Co. KG 81671 München (DE)**

(72) Erfinder:
• **FLUHRER, Christoph**
  **82061 Neuried (DE)**

• **GUTSCHE, Thomas**
  **81673 München (DE)**

(74) Vertreter: **Körfer, Thomas Mitscherlich PartmbB Patent- und Rechtsanwälte Sonnenstrasse 33 80331 München (DE)**

(56) Entgegenhaltungen:
EP-A1- 0 443 173        EP-A1- 1 333 454
US-A1- 2007 164 843     US-A1- 2008 042 785

EP 2 740 180 B1

**Beschreibung**

Die Erfindung bezieht sich auf eine Vorrichtung zum Schutz eines Hochfrequenzanschlusses gegen Überspannung.

Hochfrequenzanschlüsse werden vor Überspannungen, wie sie beispielsweise durch Blitzbeeinflussung auftreten können, geschützt, indem alle Ein- und Ausgänge eines Verstärkers mit Schutzelementen versehen werden. Hierzu wird in der EP 1 333 454 A1 eine aus einem elektrisch leitfähigen Draht bestehende Spule eingesetzt. Es wird ein Grobschutz in Verbindung mit einem Feinschutz erläutert. Dies geschieht, indem die Spule in Richtung der Spulenachsen einen sich in Richtung auf ein mit dem Hochfrequenzanschluss verbundenes Ende der Spule verjüngenden Teil aufweist.

Nachteilig an der Spule der EP 1 333 454 A1 ist, dass sie in einem aufwändigen Verfahren hergestellt werden muss, da ein Draht auf eine Schablone gewickelt werden muss. Die Schablone besteht aus einem Zylinder und einem Dorn, der an einer Kopfseite des Zylinders angebracht ist. Dies ist kostenintensiv, da in der Regel nur geringe oder mittlere Stückzahlen produziert werden können, indem durch eine aufwändige Sonderfertigung ein elektrisch leitfähiger Draht auf den Zylinder und den Dorn gewickelt werden muss.

Es ist daher die Aufgabe der Erfindung, eine Überspannungsvorrichtung zu schaffen, die kostengünstig zu produzieren ist und möglichst mit Standardbauteilen realisierbar ist.

Die Aufgabe wird durch die erfindungsgemäße Überspannungsvorrichtung gemäß Anspruch 1 gelöst. In den Unteransprüchen sind vorteilhafte Weiterbildungen der erfindungsgemäßen Überspannungsschutzvorrichtung dargestellt.

Zum Schutz einer Schaltung, beispielsweise eines Verstärkers, gegen Überspannungen, beispielsweise durch Blitzschlag, die die Bauelemente des Verstärkers beschädigen können, wird erfindungsgemäß eine Spulenanordnung verwendet, welche sich aus zwei oder mehr separaten Spulen im Signalpfad vom Hochfrequenzanschluss zum Massepotential, mit unterschiedlichen, steigenden Induktivitäten zusammensetzt. Die Spulen sind im Signalpfad elektrisch in Reihe geschaltet.

Die steigenden Induktivitäten werden vorzugsweise erreicht, indem die Querschnitte der einzelnen im Signalpfad direkt miteinander kontaktierten bzw. direkt benachbarten Spulen ansteigen, aber innerhalb einer Spule konstant bleiben, also so dass die Querschnittsflächen der Spulen mit der geringeren Induktivität kleiner oder gleich den Querschnittsflächen der direkt kontaktierten bzw. direkt benachbarten Spulen mit der größeren Induktivität ist.

Durch die unterschiedlichen Querschnittsflächen der Spulen wird erreicht, dass bei der Spule mit der geringeren Querschnittsfläche aufgrund der damit verbundenen Reduzierung der parasitären Kapazität der Spule die Resonanzfrequenz erhöht wird. Der Arbeitsbereich der so erzeugten Überspannungsschutzvorrichtung wird damit im Vergleich zu einer einzigen Spule mit konstanter Induktivität bzw. Querschnittsfläche zu höheren Frequenzen hin vergrößert. Durch die Spule mit der größeren Induktivität bzw. Querschnittsfläche wird erreicht, dass auch für niedrige Frequenzen eine ausreichend hohe Induktivität sichergestellt ist und dadurch der Blindwiderstand der Spule deutlich oberhalb der Nennimpedanz des Hochfrequenzanschlusses (in der Regel 50 Ω) liegt. Durch die so erreichte hohe Induktivität der Spule kann die Gesamtbaulänge der Spule gering gehalten werden, so dass ein Einbau auch unter engen räumlichen Abmessungen möglich ist. Im Vergleich zum in der EP 1 333 454 A1 offenbarten konischen Ende, erzielt man bessere Eigenschaften in Bezug auf die einzelnen Resonanzfrequenzen.

Durch die in den Unteransprüchen aufgeführten Maßnahmen sind vorteilhafte Weiterbildungen der erfindungsgemäßen Überspannungsvorrichtung möglich.

Ausführungsbeispiele der erfindungsgemäßen Überspannungsschutzvorrichtung sind in der Zeichnung beispielhaft dargestellt und werden anhand der nachfolgenden Beschreibung näher erläutert. Es zeigen:

Fig. 1    den Stand der Technik mit einer Spule, die sich an einem Ende konisch verjüngt;

Fig. 2    eine Aufsicht auf ein erstes Ausführungsbeispiel einer erfindungsgemäßen Überspannungsschutzvorrichtung mit einer Spulenanordnung, die sich aus zwei separaten Spulen zusammensetzt;

Fig. 3    einen Querschnitt des ersten erfindungsgemäßen Ausführungsbeispiels mit einer Spulenanordnung, die sich aus zwei Spulen zusammensetzt;

Fig. 4    einen Querschnitt eines zweiten erfindungsgemäßen Ausführungsbeispiels mit einer Spulenanordnung, die aus zwei Spulen besteht, die mit einem Lötpad verbunden sind; und

Fig. 5    eine Aufsicht auf ein drittes erfindungsgemäßes Ausführungsbeispiel mit einer Spulenanordnung, die sich aus zwei separaten Spulen zusammensetzt, die magnetisch weitgehend entkoppelt sind;

Fig. 6    eine Herstellungsmethode eines vierten erfindungsgemäßen Ausführungsbespiels aus einem Metallblech;

Fig. 7A   eine Spulenwicklung aus einem Metallblech des vierten Ausführungsbeispiels mit einer Anordnung des Blechstreifens in Längsrichtung und

Fig. 7B    eine Spulenwicklung aus einem Metallblech des vierten Ausführungsbeispiels mit einer Anordnung des Blechstreifens in radialer Richtung.

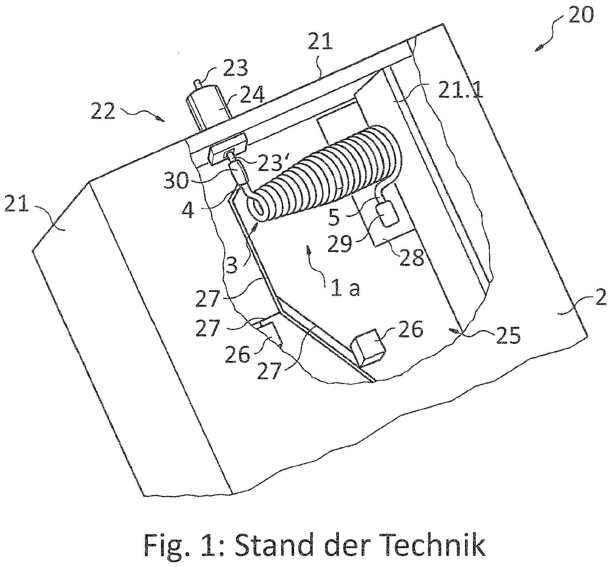

Einander entsprechende Teile sind in allen Figuren mit den gleichen Bezugszeichen versehen. Insbesondere sind die Bezugszeichen der Fig. 1, welche den Stand der Technik betreffen, in Übereinstimmung zu den erfindungsgemäßen Ausführungsbeispielen dargestellt.

Fig. 1 zeigt als Stand der Technik eine Überspannungsschutzvorrichtung zum Schutz eines Hochfrequenzanschlusses 22 gegen Überspannung. Der Hochfrequenzanschluss 22 besteht aus einem durchgeführten Kontakt 23 und einer elektromagnetischen Schirmung 24. Die eigentliche Signalleitung erfolgt über den Kontakt 23, der in das Innere des Gehäuses 21 durchgeführt ist und dort als durchgeführter Kontakt 23' bezeichnet ist. Die Spule 1a ist aus einem elektrischen Draht gewickelt. Das zweite Anschlussstück 5 der Spule 1a ist mit einem Massepotential 28 kontaktiert. Die Spule 1a weist in Richtung einer Spulenachse einen sich in Richtung auf ein mit dem durchgeführter Kontakt 23' des Hochfrequenzanschlusses 22 verbundendes Ende der Spule verjüngenden Teil 3 auf. Die Verjüngung endet in dem ersten Anschlussstück 4, welches mit dem durchgeführten Kontakt 23' des Hochfrequenzanschlusses 22 einer Schaltung 20 über eine Lötverbindung 30 verbunden ist. Die Bauelemente 26 der Schaltung 20 sind über einen Hochfrequenzleiter 27 kontaktiert. Über ein metallisches Gehäuse 21 und eine Trennwand 21.1 wird die Überspannungsschutzvorrichtung elektromagnetisch isoliert.

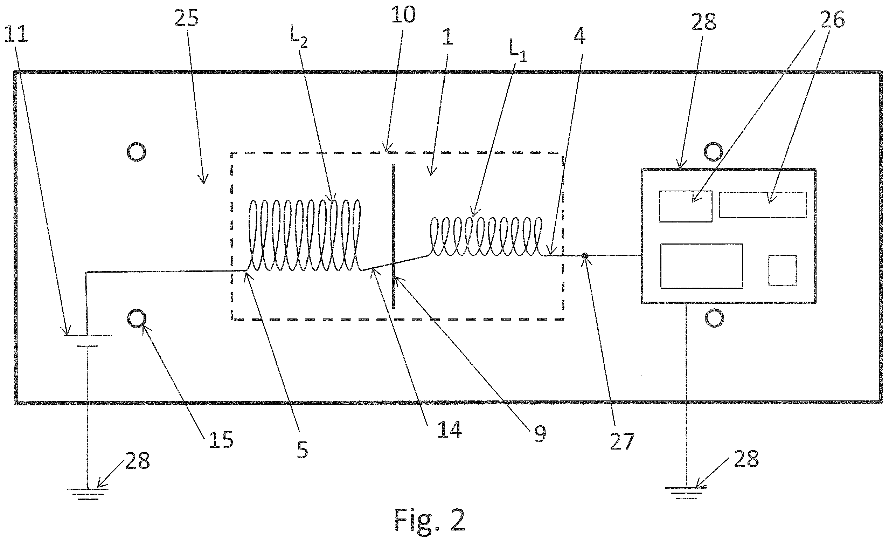

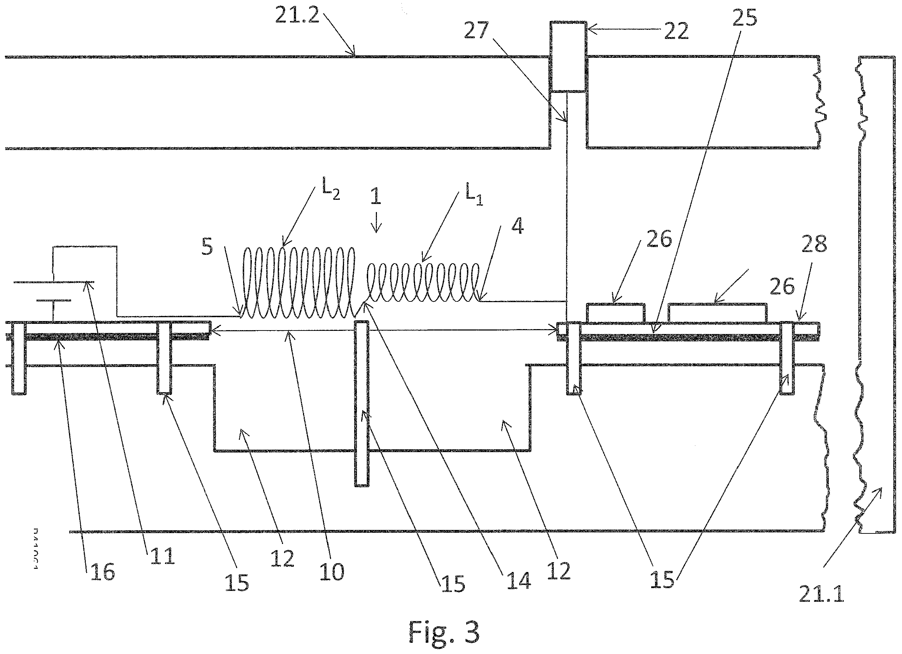

Die erfindungsgemäße Überspannungsschutzvorrichtung zum Schutz eines Hochfrequenzanschlusses 22 gegen Überspannung weist dagegen bei dem in Fig. 2 dargestellten Ausführungsbeispiel eine Spulenanordnung 1 auf, die aus zwei oder mehr zylindrischen Spulen in Serie mit n unterschiedlichen, größer werdenden Querschnittsflächen $A_1$, $A_2$, ..., $A_n$ bzw. im Fall von runden Querschnitten mit ansteigenden Durchmessern $d_1$, $d_2$, ..., $d_n$ besteht. n bezeichnet die Anzahl der Spulen. Das Spulenende mit der kleinsten Querschnittsfläche $A_1$ ist mit dem in Fig. 3 gezeigten Hochfrequenzanschluss 22 über ein erstes Anschlussstück 4 verbunden. Ein zweites Anschlussstück 5 für das Spulenende mit der größten Querschnittsfläche $A_n$ wird entweder direkt oder über eine Strom- oder Spannungsquelle 11 mit einem Massepotential 28 verbunden. In der Regel handelt es sich um eine Gleichspannungs-(DC)-Quelle.

Fig. 2 zeigt die Aufsicht auf das erste Ausführungsbeispiel einer erfindungsgemäßen Vorrichtung zum Schutz der Schaltung 20. Der erfindungsgemäße Aufbau wird von einem metallischen Gehäuse 21 umgeben. Dieses dient zur elektromagnetischen Abschirmung. Die Spulenanordnung 1 führt den durchgeführten Kontakt 23' des Hochfrequenzanschlusses 22 zur Strom- oder Spannungsversorgung 11. Die zu schützende Schaltung 20 bzw. die zu schützenden Bauteile 26 sind sowohl mit dem Hochfrequenzanschluss 22 als auch mit Massepotential 28 kontaktiert. Die Leiterplatte 25 ist ganzflächig metallisiert. Lediglich unter der Spulenanordnung 1 bzw. unter den Spulen $L_1$, $L_2$, ..., $L_n$ befindet bzw. befinden sich je eine rechteckige Aussparung 10 der Metallisierung 16.

Fig. 3 illustriert einen Querschnitt durch das bereits in Fig. 2 erläuterte Ausführungsbeispiel der Überspannungsschutzvorrichtung. Zusätzlich ist der Hochfrequenzanschluss 22 zu sehen. Dieser wird von oben auf die Schaltung 20 geführt. Die Schaltung 20, die Spulenanordnung 1 und die Strom- oder Spannungsquelle 11 befinden sich auf der Leiterplatte 25, welche mit Stützelementen 15 am Gehäuse 21 befestigt ist. Direkt unter der Spulenanordnung 1 befindet sich eine Aussparung 12 im metallischen Gehäuse 21, welche beispielsweise durch Fräsen oder eine entsprechende Gussform hergestellt werden kann. Durch den durch die Aussparung 12 zusätzlichen Hohlraum bzw. Abstand wird sowohl Gewicht eingespart als auch eine drastische Reduzierung der parasitären Kapazitäten erreicht. Die beiden Spulen $L_1$, $L_2$, die die Spulenanordnung 1 bilden, sind durch ein Stück Draht 14 elektromechanisch miteinander verbunden.

Vorteilhafterweise setzt sich die Spulenanordnung 1 aus einer ersten Spule $L_1$ und einer zweiten Spule $L_2$ aus getrennten Spulen zusammen, die elektromechanisch, insbesondere durch eine Lötverbindung, miteinander verbunden sind. Die Enden der einzelnen Spulen $L_1$, $L_2$ sind vorzugsweise als Kontaktstellen ausgebildet und können untereinander verbunden werden. Es sind aber auch andere Verbindungen denkbar, wie zum Beispiel Steckverbindungen, Schweißen, Verzwirbeln oder Lüsterklemmen. Analoges gilt für die weiteren elektromechanisch direkt miteinander kontaktierten bzw. verbundenen Spulen $L_2$, $L_3$, ... $L_n$. Auf diese Weise können Standardbauteile zum Herstellen von Spulen 1 eingesetzt werden, so dass erfindungsgemäß der aufwändige Wickelvorgang eines Drahts auf eine Schablone entfällt.

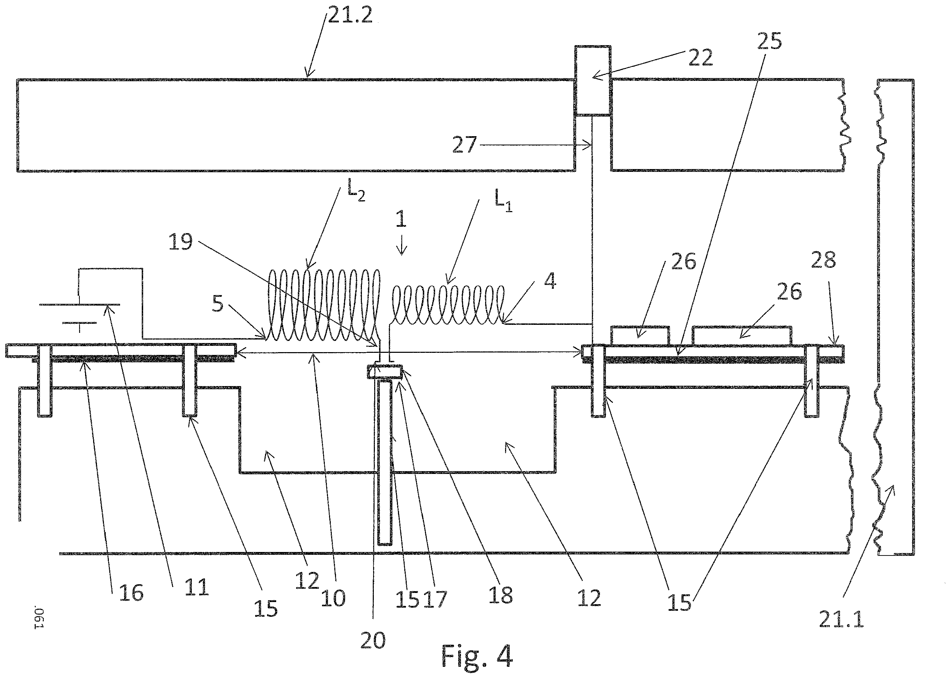

Das in Fig. 4 vorgestellte Ausführungsbeispiel unterscheidet sich von Fig. 3 dadurch, dass die Verbindung der beiden Spulen L1, L2 nicht durch eine Verbindung mit einem bloßen Stück Draht geschieht, sondern die abstehenden Beine 19 der Spulen $L_1$, $L_2$ auf einem Lötpad 18 vorzugsweise durch Reflowlöten angebracht sind, also dass die elektromechanische Verbindung der getrennten Spulen $L_1$, $L_2$, ..., $L_n$ durch Lötpads 18, welche mit Beinen 19 der Spulen $L_1$, $L_2$, ..., $L_n$ kontaktiert werden, geschieht. Das Lötpad 18 besitzt auf seiner Rückseite ebenfalls eine Metallisierung 17, welche mit dem Massepotential 28 kontaktiert ist.

Die Enden der einzelnen Spulen $L_1$, $L_2$ sind vorzugsweise als Kontaktstellen ausgebildet und können somit einfach an ein Lötpad 18 oder eine Leiterplatte 25 elektromechanisch angeschlossen werden. Die Beine 19 können für Reflowlöten optimiert sein. Die Form der Beine 20 kann beispielsweise mittels Presswerkzeugen angepasst werden. Dadurch kann die erfindungsgemäße Spule 1 einfach, preiswert und in mittleren und großen Stückzahlen schnell hergestellt werden.

In einer weiteren Ausführungsform unterscheiden sich die Ganghöhen h zwischen den einzelnen Spulenabschnitten, so dass sowohl die Induktivität als auch die Kapazität der einzelnen Spulenabschnitte variiert. Insbesondere die Induktivität L ändert sich dadurch, dass in Gl. 1 die Anzahl der Wicklungen N quadratisch eingeht, während die Ganghöhe h zwischen den einzelnen Wicklungen in Gl. 2, die Kapazität C reziprok bestimmt. A ist die Querschnittsfläche, $\mu$ die Permeabilität und $\varepsilon$ die Dielektrizitätskonstante.

$$L = \mu * N^2 / l * A \qquad (1)$$

$$C = \varepsilon * A / h \qquad (2)$$

Weiter steigern lässt sich der Frequenzbereich der durch die Spulenanordnung 1 abgedeckt werden kann, indem der Drahtdurchmesser der zweiten Spule $L_2$ größer ist, als der Drahtdurchmesser der ersten Spule $L_1$ bzw. der Drahtdurchmesser mit steigender Querschnittsfläche $A_1$, $A_2$, ..., $A_n$ bzw. Induktivität der einzelnen Spulen $L_1$, $L_2$, ..., $L_n$ ansteigt oder zumindest konstant bleibt, so dass der Drahtdurchmesser der Spulen $L_1$, $L_2$, ..., $L_{n-1}$ mit niedrigeren Induktivität kleiner oder gleich ist als der Drahtdurchmesser der elektrisch direkt mit der genannten Spule $L_1$, $L_2$, ..., $L_{n-1}$ kontaktierten bzw. benachbarten Spule mit der größeren Induktivität $L_2$, $L_3$, ..., $L_n$.

Dies hat den Vorteil, dass die Kapazität zwischen den einzelnen Wicklungen im Signalpfad vom Hochfrequenzanschluss 22 zum Massepotential 28 der betrachteten Spule $L_k$ geringer ist, als die Kapazität zwischen den Wicklungen der jeweils direkt folgenden Spule $L_{k+1}$. k ist eine natürliche Zahl mit Werten von 1 bis n-1. Durch die damit verbundene geringere parasitäre Kapazität der betrachteten vorderen Spule $L_k$ wird die Resonanzfrequenz erhöht, so dass der Arbeitsbereich der Überspannungsschutzvorrichtung damit zusätzlich zu höheren Frequenzen hin vergrößert wird. Dieser Effekt kann produktionstechnisch mit einer einzigen konischen Spule nicht erreichen werden, da dieser dann in seiner Länge unterschiedliche Drahtdicken haben müsste, um ihn auf eine Schablone aufwickeln zu können.

Der elektrisch leitfähige Draht besteht vorzugsweise aus Kupferlackdraht mit einer Querschnittsfläche von 0,1 - 1 mm². Die Querschnittsfläche des Drahtes bestimmt die maximale Stromstärke, die beispielsweise im Falle eines Blitzeinschlags abgeführt werden kann. In einer vorteilhaften Ausführung sind die einzelnen Wicklungen der Spulenanordnung 1 eng aneinander gewickelt.

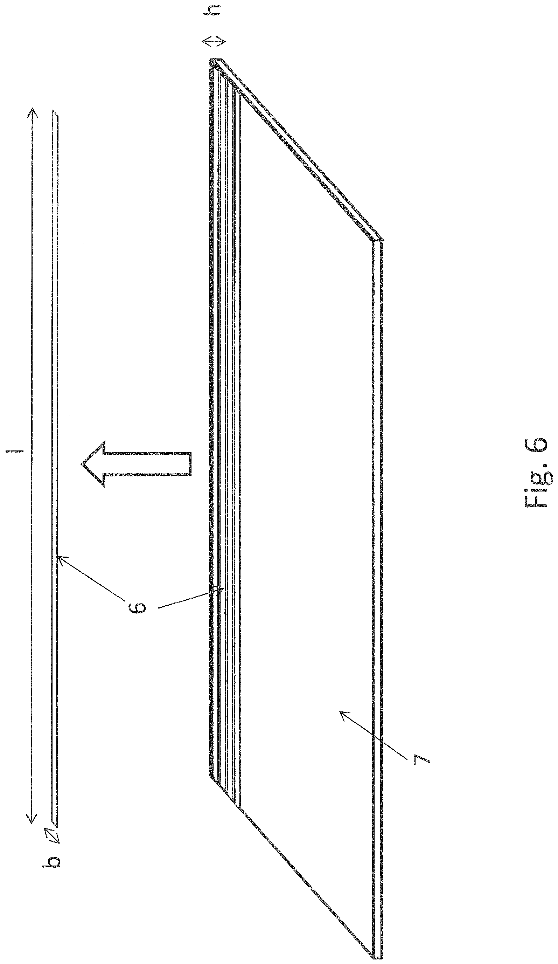

In einer weiteren Ausführungsform der Erfindung können wie in Fig. 6 dargestellt, Spulen hergestellt werden, indem von einem dünnen Blech 7 vorzugsweise aus Metall sehr langgezogene Rechtecke 6 mit Länge 1, Breite b, Dicke h beispielsweise durch Schneiden, insbesondere mit einem Laser, oder durch Stanzen abgetrennt werden.

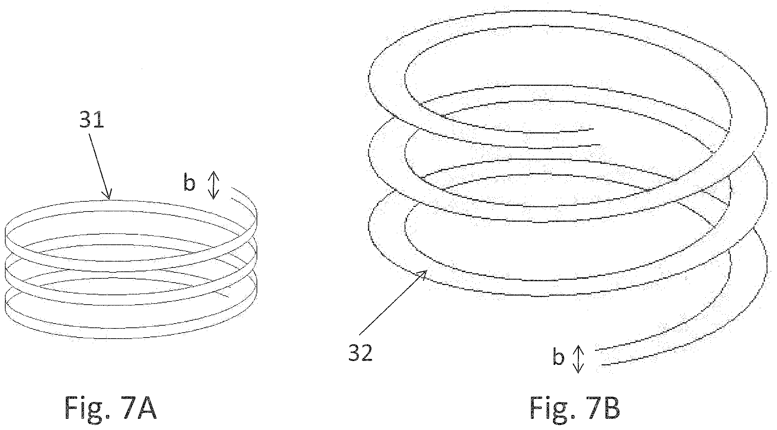

In einer in Fig. 7A dargestellten Bauform werden Spulen $L_1$, $L_2$, ..., $L_n$ mit niedriger Kapazität, also hoher Resonanzfrequenz, so aufgewickelt, dass die Dicke d die Kapazität zwischen den einzelnen Wicklungen der Spulen $L_1$, $L_2$, ..., $L_n$ bestimmt. Vorzugsweise besitzen Spulen $L_1$, $L_2$, ..., $L_n$ dieser Bauart vom senkrechten Typ 31 wie in Fig. 7A, dargestellt auch eine geringe Querschnittsfläche $A_1$, $A_2$, ..., $A_n$. Bei dieser Bauform liegen sich die schmäleren Flächen, welche der Blechstärke entsprechen und in Fig. 7A und Fig. 7B nicht dargestellt sind, gegenüber.

In einer weiteren in Fig. 7B dargestellten Bauform vom flachen Typ 32 werden Spulen $L_1$, $L_2$, ..., $L_n$ mit hoher Kapazität bei gegenüber Fig. 7A nahezu gleicher Induktivität, also niedriger Resonanzfrequenz, so aufgewickelt, dass die Breite b die Kapazität zwischen den einzelnen Wicklungen der Spulen $L_1$, $L_2$, ..., $L_n$ bestimmt. Bei der Form der Spule vom flachen Typ 32 liegen sich die größeren Flächen gegenüber. Auf diese Weise kann die maximal mögliche Stromstärke in allen Spulen $L_1$, $L_2$, ..., $L_n$ der Spulenanordnung 1 gleich groß sein, aber es wird ein weiterer Freiheitsgrad zum Einstellen der Induktivität bzw. der Kapazität der einzelnen Spulen $L_1$, $L_2$, ..., $L_n$ gewonnen. Insbesondere kann die Resonanzfrequenz verringert werden, wenn die Kapazität zwischen den Wicklungen einer Spule $L_1$, $L_2$, ..., $L_n$ erhöht wird, indem die flachen Seiten der Wicklungen zueinander in geringem Abstand positioniert werden.

Werden die flachen Seiten radial nach außen zeigend positioniert, also so, dass die Normale der flachen Seite nach radial außen zeigt, idealerweise in hohem Abstand der Spulenwicklungen, erhält man eine sehr hohe Resonanzfrequenz, da die Spulen $L_1$, $L_2$, ..., $L_n$ eine niedrige Kapazität und Induktivität aufweist.

Die Fig. 6 sowie Fig. 7A und 7B sind zur besseren Sichtbarkeit nicht maßstabsgetreu. Jedoch gilt das Verhältnis 1 >> b > 3h und die Querschnittsfläche der stromführenden, metallischen zu einer Spule $L_1$, $L_2$, ..., $L_n$ aufgewickelten Blechstreifen 6 sollte bei Spulen $L_1$, $L_2$, ..., $L_n$ in einer Spulenanordnung 1 konstant sein.

Von Vorteil ist, dass das Verhältnis der Induktivitäten der ersten Spule $L_1$ zu der zweiten Spule $L_2$ bzw. zwei, elektrisch direkt miteinander kontaktierten bzw. benachbarten Spulen $L_k$, $L_{k+1}$ zwischen 4 zu 1 und 16 zu 1 liegt, vorzugsweise bei etwa 8 zu 1.

Die Durchmesser der zweiten und der ersten Spule $L_2$, $L_1$ besitzen ein Verhältnis zwischen 1,5 zu 1 und 3 zu 1, besonders vorteilhaft ein Verhältnis von 2 zu 1. Typische Durchmesser der ersten runden Spule $L_1$ liegen zwischen 1 mm und 4 mm, insbesondere 2 mm. Typische Durchmesser der zweiten runden Spule $L_2$ liegen zwischen 1 mm und 4 mm, insbesondere 2 mm. Vorteilhafterweise sollte der Durchmesser der ersten Spule $L_1$ kleiner sein als der Durchmesser der zweiten Spule $L_2$.

Weitere mögliche Ausführungsformen werden durch Spulen gebildet mit rechteckigem oder ovalem Querschnitt statt einem Kreis.

Die entsprechenden Querschnittsflächen $A_1$, $A_2$ zu runden Spulen sind mithilfe von Gl. 3 ermittelbar, in der A die Querschnittsfläche und d den Durchmesser bedeuten.

$$A = \pi * (d/2)^2 \qquad (3)$$

Somit ergibt sich eine entsprechende Querschnittsfläche $A_1$ der ersten Spule $L_1$ zwischen 0,78 mm$^2$ und 12,57 mm$^2$, insbesondere 3,14 mm$^2$. Die entsprechende Querschnittsfläche $A_2$ der zweiten Spule $L_2$ beträgt zwischen 3,14 mm$^2$ und 28,27 mm$^2$, insbesondere 12,56 mm$^2$. In der Regel sind die Längen der einzelnen Spulen mit unterschiedlichem Durchmesser bzw. unterschiedlicher Querschnittfläche in etwa gleich.

Üblicherweise befindet sich die Überspannungsvorrichtung auf einer ganzflächig metallisierten Leiterplatte 25, welche mit dem Massepotential 28 kontaktiert ist. Durch Aussparungen 10 der Metallisierung 16 der Leiterplatte 25, insbesondere rechteckförmige Aussparungen unter den Spulen $L_1$, $L_2$, ..., $L_n$ können parasitäre Kapazitäten zwischen den Spulen $L_1$, $L_2$, ..., $L_n$ und der Leiterplatte 25 deutlich reduziert werden.

Erfindungsgemäß ist die Spulenanordnung 1 bevorzugt als Luftspule implementiert. Eine Luftspule besitzt den Vorteil einer geringen Masse. Speziell im Fall von unterschiedlichen Ganghöhen h ist es jedoch vorteilhaft Spulenabschnitte mit weichmagnetischem Kern zu versehen, so dass die einzelnen Spulenabschnitte $L_1$, $L_2$, ..., $L_n$ individuell optimiert werden können, ohne dass über Streufelder die restlichen Spulenabschnitte $L_1$, $L_2$, ..., $L_n$ beeinflusst werden oder den Spulenabschnitt $L_1$, $L_2$, ..., $L_n$ beeinflussen. Auch kann es vorteilhaft sein, nur bestimmte Spulenabschnitte $L_1$, $L_2$, ..., $L_n$ mit einem magnetischen Kern zu versehen.

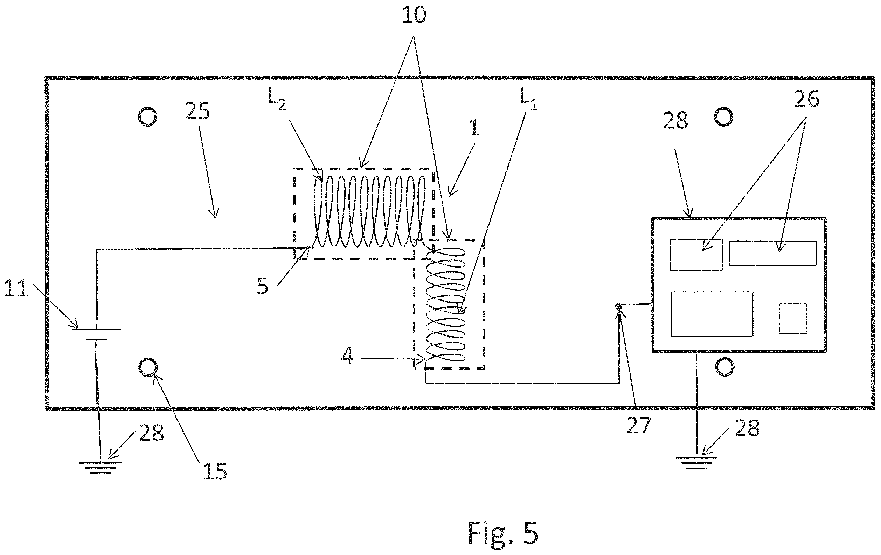

Erfindungsgemäß wird in einer weiteren Ausführungsform eine Entkopplung der einzelnen Spulenabschnitte $L_1$, $L_2$, ..., $L_n$ wie in Fig. 5 dargestellt weitgehend erreicht, indem die direkt elektromechanisch kontaktierten bzw. benachbarten Spulenabschnitte in unterschiedliche Richtungen, orthogonal zueinander orientiert sind. Somit beeinflussen sich die magnetischen Felder der einzelnen Spulenabschnitte $L_1$, $L_2$, ..., $L_n$ gegenseitig kaum. Nicht direkt benachbarte bzw. direkt kontaktierte Spulenabschnitte $L_1$, $L_2$, ..., $L_n$ können jedoch auch parallel orientiert angeordnet werden, sofern die Spulenabschnitte $L_1$, $L_2$, ..., $L_n$ in ausreichendem geometrischen Abstand, z.B. ca. 5 mm, zueinander stehen. Die Aussparungen 10 der Metallisierung 16 unter den einzelnen Spulen $L_1$, $L_2$, ..., $L_n$ sind vorteilhafterweise rechteckig und können überlappen wie in Fig. 5 dargestellt.

Eine weitere erfindungsgemäße Alternative zur elektromagnetischen Entkoppelungen der Spulen $L_1$, $L_2$, ..., $L_n$ ist jeweils zwischen den einzelnen, insbesondere den elektrisch miteinander direkt kontaktierten bzw. direkt benachbarten Spulen $L_1$, $L_2$, ..., $L_n$ eine metallische, idealerweise nicht magnetisierbare, elektrisch leitfähige Platte 9 anzubringen, welche mit dem Massepotential 28 elektrisch in Verbindung sind, wie in Fig. 2 dargestellt. Die Platte 9 kann mit Stützelementen 15 an der Leiterplatte 25 oder am Gehäuse 21 befestigt werden.

Es ist auch vorteilhaft, wenn sich die äußeren Bereiche der Spulenanordnung 1 z.B. mindestens 3 mm vom Gehäuse 21 und/oder elektrisch leitfähigen Teilen entfernt sind. Dies verringert den Einfluss von parasitären Kapazitäten signifikant. Das Gehäuse 21 ist in der Regel ebenfalls mit dem Massepotential 28 verbunden. Um möglichst wenig Volumen zu verbrauchen, sollte der Abstand jedoch nicht größer als 10 mm betragen. Bevorzugt wird deswegen ein Abstand von z.B. ca. 5 mm gewählt.

Erfindungsgemäß sind sämtliche beschriebenen Vorrichtungen auch mit mehr als zwei Spulen realisierbar und miteinander kombinierbar. Alle beschriebenen oder gezeichneten Merkmale sind im Rahmen der Erfindung beliebig miteinander kombinierbar.

**Patentansprüche**

1. Überspannungsschutzvorrichtung zum Schutz eines Hochfrequenzanschlusses (22) gegen Überspannung, die eine Spulenanordnung (1) aufweist, **dadurch gekennzeichnet,**
   **dass** die Spulenanordnung (1) aus mehreren separaten Spulen ($L_1$, $L_2$, ..., $L_n$) besteht, die elektrisch in Serie mit unterschiedlichen, steigenden Induktivitäten geschaltet sind und
   **dass** die elektromechanisch direkt miteinander verbundenen bzw. direkt benachbarten Spulen ($L_1$, $L_2$, ..., $L_n$) orthogonal zueinander angeordnet sind, und/oder dass zwischen den elektromechanisch direkt miteinander verbundenen bzw. direkt benachbarten Spulen ($L_1$, $L_2$, ..., $L_n$) jeweils eine metallische elektrisch leitfähige Platte (9) angebracht ist, welche mit einem Massepotential (28) elektrisch in Verbindung steht.

2. Überspannungsschutzvorrichtung nach Anspruch 1, **dadurch gekennzeichnet,**
   **dass** die Spule ($L_1$) mit der niedrigsten Induktivität über ein erstes Anschlussstück (4) elektromechanisch mit dem Hochfrequenzanschluss (12) und die Spule ($L_n$) mit der höchsten Induktivität über ein zweites Anschlussstück (5) entweder direkt oder über eine Strom- oder Spannungsquelle (11) mit einem Massepotential (28) verbunden ist.

3. Überspannungsschutzvorrichtung nach einem der bisherigen Ansprüche,
**dadurch gekennzeichnet,**
**dass** die Querschnittsflächen ($A_1$, $A_2$, ..., $A_{n-1}$) der Spulen mit der geringeren Induktivität ($L_1$, $L_2$, ..., $L_{n-1}$), kleiner oder gleich bezüglich den Querschnittsflächen ($A_2$, ..., $A_n$) der direkt benachbarten bzw. direkt kontaktierten Spulen mit der größeren Induktivität ($L_2$, ..., $L_n$) ist.

4. Überspannungsschutzvorrichtung nach Anspruch 1,
**dadurch gekennzeichnet,**
**dass** die elektromechanische Verbindung der getrennten Spulen ($L_1$, $L_2$, ..., $L_n$) durch Lötpads (18), welche mit Beinen (19) der Spulen ($L_1$, $L_2$, ..., $L_n$) kontaktiert werden, ausgebildet ist.

5. Überspannungsschutzvorrichtung nach einem der bisherigen Ansprüche,
**dadurch gekennzeichnet,**
**dass** der Drahtdurchmesser der Spulen ($L_1$, $L_2$, ..., $L_{n-1}$) mit niedrigeren Induktivität kleiner oder gleich ist als der Drahtdurchmesser der elektrisch direkt mit dieser Spule ($L_1$, $L_2$, ..., $L_{n-1}$) kontaktierten bzw. benachbarten Spule mit der größeren Induktivität ($L_2$, $L_3$, ..., $L_n$).

6. Überspannungsschutzvorrichtung nach einem der bisherigen Ansprüche,
**dadurch gekennzeichnet,**
**dass** das Verhältnis der Induktivitäten von zwei elektrisch direkt miteinander kontaktierten bzw. direkt benachbarten Spulen ($L_k$, $L_{k+1}$) zwischen 4 zu 1 und 16 zu 1 liegt, vorzugweise bei etwa 8 zu 1.

7. Überspannungsschutzvorrichtung nach einem der bisherigen Ansprüche,
**dadurch gekennzeichnet,**
**dass** die Überspannungsschutzvorrichtung sich auf einer metallisierten Leiterplatte (25) befindet.

8. Überspannungsschutzvorrichtung nach Anspruch 7,
**dadurch gekennzeichnet,**
**dass** sich unter den Spulen ($L_1$, $L_2$, ..., $L_n$) eine Aussparung (10) der Metallisierung (16) der Leiterplatte (25) befindet.

9. Überspannungsschutzvorrichtung nach einem der bisherigen Ansprüche,
**dadurch gekennzeichnet,**
**dass** die Querschnittsfläche ($A_1$, $A_2$, ..., $A_n$) der Spulen ($L_1$, $L_2$, ..., $L_n$) die Form eines Kreises, Rechtecks oder Ovals hat.

10. Überspannungsschutzvorrichtung nach einem der bisherigen Ansprüche,
**dadurch gekennzeichnet,**
**dass** die Querschnittsfläche des Spulendrahtes rechteckig ist.

11. Überspannungsschutzvorrichtung nach einem der bisherigen Ansprüche,
**dadurch gekennzeichnet,**
**dass** Spulen ($L_1$, $L_2$, ..., $L_n$) mit niedriger Induktivität so aufgewickelt sind, dass die Dicke des Spulendrahtes die Kapazität zwischen den einzelnen Wicklungen der Spulen ($L_1$, $L_2$, ..., $L_n$) bestimmt, indem die kleineren Flächen des Spulendrahts einander zugewandt sind, und/oder dass Spulen ($L_1$, $L_2$, ..., $L_n$) mit hoher Induktivität so aufgewickelt sind, dass die Breite (b) des Spulendrahts die Kapazität zwischen den einzelnen Wicklungen der Spulen ($L_1$, $L_2$, ..., $L_n$) bestimmt, in dem die größeren Flächen des Spulendrahts einander zugewandt sind.

## Claims

1. Overvoltage protection device for protecting a high frequency connection (22) against overvoltage, which comprises a coil arrangement (1),
**characterised in that**
the coil arrangement (1) consists of a plurality of separate coils ($L_1$, $L_2$, ..., $L_n$) which are connected electrically in series with different rising inductances and **in that** the coils ($L_1$, $L_2$, ..., $L_n$) which are connected directly with one another electromechanically or directly adjacent are arranged orthogonally to one another, and/or in that attached between the coils ($L_1$, $L_2$, ..., $L_n$) which are connected directly with one another electromechanically or directly adjacent there is in each case a metallic electrically conductive plate (9) which communicates electrically with a ground potential (28).

2. Overvoltage protection device according to claim 1,
**characterised in that**
the coil ($L_1$) with the lowest inductance is connected electromechanically with the high frequency connection (12) by means of a first connecting element (4) and the coil ($L_n$) with the highest inductance is connected with a ground potential (28) by means of a second connecting element (5) either directly or via a current source or voltage source (11).

3. Overvoltage protection device according to one of the preceding claims,
**characterised in that**
the cross-sectional area ($A_1$, $A_2$, ..., $A_{n-1}$) of the coils with the lower inductance ($L_1$, $L_2$, ..., $L_n$) is less than or equal to the cross-sectional area ($A_2$, ..., $A_n$) of the directly adjacent or directly contacted coils with the higher inductance ($L_2$, ..., $L_n$).

4. Overvoltage protection device according to claim 1,
**characterised in that**
the electromechanical connection of the separate coils ($L_1$, $L_2$, ..., $L_n$) is formed by solder pads (18) which are contacted with legs (19) of the coils ($L_1$, $L_2$, ..., $L_n$).

5. Overvoltage protection device according to one of the preceding claims, **characterised in that** the wire diameter of the coils ($L_1$, $L_2$, ..., $L_{n-1}$) with the lower inductance is less than or equal to the wire diameter of the coil with the greater inductance ($L_2$, $L_3$, ..., $L_n$) which is electrically directly contacted with or adjacent to this coil ($L_1$, $L_2$, ..., $L_{n-1}$).

6. Overvoltage protection device according to one of the preceding claims, **characterised in that** the ratio of the inductances of two coils ($L_k$, $L_{k+1}$) which are electrically directly contacted with one another or directly adjacent is between 4 to 1 and 16 to 1, preferably approximately 8 to 1.

7. Overvoltage protection device according to one of the preceding claims, **characterised in that** the overvoltage protection device is located on a metallised circuit board (25).

8. Overvoltage protection device according to claim 7, **characterised in that** a cut-out (10) in the metallisation (16) of the circuit board (25) is located under the coils ($L_1$, $L_2$, ..., $L_n$).

9. Overvoltage protection device according to one of the preceding claims, **characterised in that** the cross-sectional area ($A_1$, $A_2$, ..., $A_n$) of the coils ($L_1$, $L_2$, ..., $L_n$) has the shape of a circle, rectangle or oval.

10. Overvoltage protection device according to one of the preceding claims, **characterised in that** the cross-sectional area of the coil wire is rectangular.

11. Overvoltage protection device according to one of the preceding claims, **characterised in that** coils ($L_1$, $L_2$, ..., $L_n$) with low inductance are wound so that the thickness of the coil wire defines the capacitance between the individual windings of the coils ($L_1$, $L_2$, ..., $L_n$) **in that** the smaller areas of the coil wire face one another, and/or **in that** coils ($L_1$, $L_2$, ..., $L_n$) with high inductance are wound so that the breadth (b) of the coil wire defines the capacitance between the individual windings of the coils ($L_1$, $L_2$, ..., $L_n$) **in that** the larger areas of the coil wire face one another.

**Revendications**

1. Dispositif de protection contre les surtensions pour protéger une connexion à haute fréquence (22) contre la surtension, qui présente un agencement de bobines (1), **caractérisé en ce que** l'agencement de bobines (1) se compose de plusieurs bobines ($L_1$, $L_2$, ..., $L_n$) séparées qui sont électriquement connectées en série avec différentes inductances croissantes et **en ce que** les bobines ($L_1$, $L_2$, ..., $L_n$) sont agencées orthogonalement les unes aux autres de façon électromécanique directement reliées entre elles ou directement adjacentes, et/ou en ce qu'entre les bobines ($L_1$, $L_2$, ..., $L_n$) reliées de façon électromécanique directement entre elles ou directement adjacentes est respectivement montée une plaque (9) métallique électriquement conductrice, laquelle est en liaison électrique avec un potentiel de masse (28).

2. Dispositif de protection contre les surtensions selon la revendication 1, **caractérisé en ce que** la bobine ($L_1$) avec l'inductance la plus faible est reliée de façon électromécanique à la connexion à haute fréquence (12) via une première pièce de connexion (4), et la bobine ($L_n$) avec l'inductance la plus élevée est reliée à un potentiel de masse (28) via une seconde pièce de connexion (5) soit directement soit via une source de courant ou de tension (11).

3. Dispositif de protection contre les surtensions selon l'une des revendications précédentes, **caractérisé en ce que** les surfaces transversales ($A_1$, $A_2$, ..., $A_{n-1}$) des bobines avec l'inductance plus faible ($L_1$, $L_2$, ..., $L_{n-1}$) est plus petite ou égale relativement aux surfaces transversales ($A_2$, ..., $A_n$) des bobines directement adjacentes ou directement en contact avec l'inductance plus élevée ($L_2$, ..., $L_n$).

4. Dispositif de protection contre les surtensions selon la revendication 1, **caractérisé en ce que** la liaison électromécanique des bobines ($L_1$, $L_2$, ..., $L_n$) séparées est formée via des pads de brasage (18), lesquels sont mis en contact avec des pattes (19) des bobines ($L_1$, $L_2$, ..., $L_n$).

5. Dispositif de protection contre les surtensions selon l'une des revendications précédentes, **caractérisé en ce que** le diamètre de fil métallique des bobines ($L_1$, $L_2$, ..., $L_{n-1}$) avec une inductance plus faible est plus petit ou égal au diamètre de fil métallique de la bobine avec l'inductance plus élevée ($L_2$, $L_3$, ..., $L_n$) mise en contact ou adjacente électriquement et directement avec cette bobine ($L_1$, $L_2$, ..., $L_{n-1}$).

**6.** Dispositif de protection contre les surtensions selon l'une des revendications précédentes, **caractérisé en ce que** le rapport des inductances de deux bobines ($L_k$, $L_{k+1}$) électriquement et directement mise en contact l'une avec l'autre ou directement adjacentes se situe entre 4 à 1 et 16 à 1, de préférence à environ 8 à 1.

**7.** Dispositif de protection contre les surtensions selon l'une des revendications précédentes, **caractérisé en ce que** le dispositif de protection contre les surtensions se situe sur une plaque conductrice (25) métallique.

**8.** Dispositif de protection contre les surtensions selon la revendication 7, **caractérisé en ce que** un évidement (10) de la métallisation (16) de la plaque conductrice (25) se situe sous les bobines ($L_1$, $L_2$, ..., $L_n$).

**9.** Dispositif de protection contre les surtensions selon l'une des revendications précédentes, **caractérisé en ce que** la surface transversale ($A_1$, $A_2$, ..., $A_n$) des bobines ($L_1$, $L_2$, ..., $L_n$) a la forme d'un cercle, d'un rectangle ou d'un ovale.

**10.** Dispositif de protection contre les surtensions selon l'une des revendications précédentes, **caractérisé en ce que** la surface transversale du fil métallique de bobine est rectangulaire.

**11.** Dispositif de protection contre les surtensions selon l'une des revendications précédentes, **caractérisé en ce que** des bobines ($L_1$, $L_2$, ..., $L_n$) avec une inductance faible sont enroulées de telle manière que l'épaisseur du fil métallique de bobine détermine la capacité entre les divers enroulements des bobines ($L_1$, $L_2$, ..., $L_n$) du fait que les surfaces plus petites du fil métallique de bobine se font face, et/ou des bobines ($L_1$, $L_2$, ..., $L_n$) avec une inductance élevée sont enroulées de telle manière que la largeur (b) du fil métallique de bobine détermine la capacité entre les divers enroulements des bobines ($L_1$, $L_2$, ..., $L_n$) du fait que les surfaces plus grandes du fil métallique de bobine se font face.

Fig. 1: Stand der Technik

Fig. 2

Fig. 3

EP 2 740 180 B1

Fig. 4

EP 2 740 180 B1

Fig. 5

EP 2 740 180 B1

Fig. 6

EP 2 740 180 B1

Fig. 7B

Fig. 7A

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1333454 A1